# FASCICULE DE BREVET EUROPEEN

(11) **EP 0 752 338 B1**
(45) Date de publication et mention de la délivrance du brevet: **22.04.1998**
(21) Numéro de dépôt: 96470013.2
(22) Date de dépôt: 19.06.1996
(51) Int. Cl.: B60N 2/08

(54) **Glissière verrouillable en position pour sièges de véhicules automobiles**
Verriegelbare Schiene für Kraftfahrzeugsitze
Lockable slide for automotive vehicle seats

(30) Priorité: 04.07.1995 FR 9508214
(43) Date de publication de la demande: 08.01.1997
(73) Titulaire: BERTRAND FAURE EQUIPEMENTS S.A., 92641 Boulogne Cedex (FR)
(72) Inventeur: Couasnon, Christian, 61100 Flers (FR)
(74) Mandataire: Schmit, Christian Norbert Marie

(56) Documents cités:
- EP-A- 0 098 702
- EP-A- 0 411 842
- FR-A- 2 359 006
- FR-A- 2 437 955
- FR-A- 2 489 763
- FR-A- 2 562 004
- FR-A- 2 656 262
- US-A- 4 776 551

## Description

La présente invention concerne une glissière verrouillable en position, pour des sièges de véhicules automobiles, notamment des sièges avant. Ces sièges sont montés sur glissière pour permettre leur réglage en position longitudinale et ils doivent pouvoir être verrouillés, quelle que soit leur position de réglage, pour éviter tout déplacement longitudinal.

On connaît déjà différents systèmes de verrouillage, couramment basés sur le principe de la mise en prise d'un verrou lié à la partie mobile de la glissière, cette partie mobile étant fixée au siège, avec des crans aménagés sur la partie fixe, solidaire du plancher du véhicule. Le verrou est classiquement maintenu en position verrouillée, en prise avec les dits crans, par des moyens de rappel élastique, le déverrouillage étant commandé par un levier dont la manoeuvre permet de dégager le verrou des crans et autorise ainsi le coulissement de la glissière et son réglage en position.

On connaît ainsi, par exemple par FR-A-2 489 763 ou EP-A-411 842, des glissières formées d'un profilé mâle et d'un profilé femelle coulissant l'un dans l'autre. Le profilé mâle, ayant une section de forme générale en "U" comporte sur un côté, formant une branche du "U", une série de crans, et le verrou, porté par un bras pivotant sur le profilé femelle, comporte des dents, ou une plaque pourvue de plusieurs orifices, qui s'engagent sur les dits crans pour assurer le verrouillage longitudinal requis. Dans un tel système, la pièce constituant le verrou est située à l'extérieur de la glissière et, de ce fait, accroît l'encombrement de celle-ci. De plus, un tel système nécessite de prévoir une pièce d'articulation du verrou sur la glissière et un ressort de rappel du verrou dans la position de verrouillage.

La présente invention vise à simplifier la réalisation de tels systèmes de verrouillage, en réduisant le nombre de pièces nécessaires, et à réduire l'encombrement transversal des glissières.

Avec ces objectifs en vue, l'invention a pour objet une glissière pour siège de véhicule, comportant un profilé femelle de section en forme de U présentant deux ailes, et un profilé mâle coulissant longitudinalement entre les dites ailes dans le dit profilé femelle, et un verrou de blocage longitudinal du profilé mâle sur le profilé femelle, le verrou étant lié à un premier des dits profilés et pourvu de créneaux qui s'engagent, dans une position de verrouillage, avec des crans aménagés sur l'autre profilé, et des moyens de déverrouillage agissants sur le verrou pour dégager les dits créneaux des dits crans, caractérisée en ce que le verrou est formé par une partie d'extrémité d'une lame élastiquement flexible, la dite lame étant placée à l'intérieur de la glissière et fixée, a distance de la dite partie d'extrémité, sur le dit premier profilé, et en ce que les moyens de déverrouillage agissent sur la dite partie d'extrémité de la lame pour dégager, par une flexion élastique de ladite lame, les dits créneaux des dits crans.

Grâce à l'invention, le nombre de pièces est donc réduit le plus possible puisque la dite lame assure à la fois le verrouillage, par ses créneaux, et le rappel élastique dans la position de verrouillage, par son élasticité propre. De plus, la dite lame est placée à l'intérieur de la glissière. De la sorte, les organes de verrouillage sont protégés par la glissière et, l'encombrement du système de glissières est limité au profil externe de celles-ci.

Selon un premier mode de réalisation, le verrou est formé par une partie d'extrémité arrière de la lame et les moyens de déverrouillage comportent un palonnier comprenant au moins une branche articulée sur une partie d'extrémité avant de la lame et dont l'extrémité s'appuie sur la dite extrémité formant verrou.

Selon un deuxième mode de réalisation, les moyens de déverrouillage comportent une came pivotante appuyant sur la partie d'extrémité formant verrou et commandée par une poignée.

D'autres caractéristiques et avantages de l'invention apparaîtront dans les revendications dépendantes et dans la description qui va suivre.

On se reportera aux dessins annexés dans lesquels :
- la figure 1 est une vue générale en perspective d'un ensemble de glissières conforme au premier mode de réalisation, c'est-à-dire à commande de déverrouillage par palonnier ;
- la figure 2 est une vue latérale en coupe d'une glissière de cet ensemble, dans une première variante de ce premier mode ;
- la figure 3 est une vue en coupe selon la ligne III-III de la figure 2 ;
- la figure 4 est une vue partielle en coupe selon la ligne IV-IV de la figure 3, illustrant la liaison de verrouillage entre le verrou et les profilés de la glissière ;
- la figure 5 est une vue similaire à celle de la figure 4, dans une autre forme de réalisation du verrou ;
- la figure 6 est une vue en perspective de la lame formant verrou dans la première variante ;
- la figure 7 est une vue latérale en coupe d'une deuxième variante du premier mode de réalisation ;
- la figure 8 est une vue en perspective de la lame formant verrou dans le cas de cette deuxième variante ;
- la figure 9 est une vue latérale en coupe du deuxième mode de réalisation de la glissière, c'est-à-dire avec une commande latérale de déverrouillage par levier pivotant ;
- la figure 10 est une vue en perspective d'un ensemble de glissières selon ce deuxième mode ;
- la figure 11 est une vue latérale en coupe d'une troisième variante du premier mode ;
- la figure 12 est une vue en coupe selon la ligne XII-XII de la figure 11 ;
- la figure 13 est une vue en perspective de la lame formant verrou utilisée dans cette troisième variante ;
- la figure 14 est une vue de dessus du palonnier de déverrouillage utilisé dans cette troisième variante ;
- la figure 15 est une vue en coupe du palonnier selon la ligne XV-XV de la figure 14 ;
- la figure 16 est une vue en coupe du palonnier selon la ligne XVI-XVI de la figure 14.

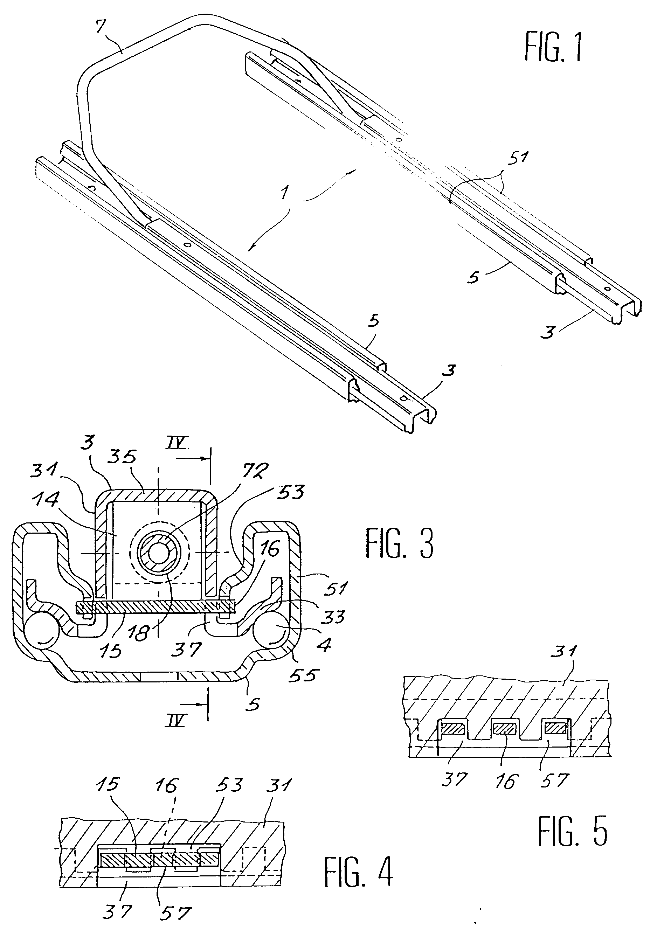

Le système de glissières représenté à la figure 1 est constitué de deux glissières 1 parallèles, formées chacune d'un profilé mâle 3 coulissant dans un profilé femelle 5. Les profilés femelles sont prévus pour être fixés sur le plancher 2 d'un véhicule, et l'armature d'un siège, non représentée, est fixée sur les profilés mâles. Un palonnier de commande 7 est prévu pour assurer le déverrouillage des glissières et permettre le réglage de la position du dit siège. Comme on le verra par la suite, le déverrouillage peut aussi être assuré par d'autres moyens, par exemple une poignée disposée latéralement sur un côté d'une glissière.

Dans les différentes variantes qui vont être décrites, les glissières sont réalisées de manière similaire pour ce qui concerne leur fonction de coulissement et de positionnement. Le profilé femelle 5 a une section de forme générale en U ouvert vers le haut, comportant deux ailes 51 repliées l'une vers l'autre et se terminant par un retour en forme de crochet 53 tourné vers l'intérieur du profilé et vers le bas.

Le profilé mâle 3 a aussi une section de forme générale en U, ouvert vers le bas. Les ailes 31 de ce U se prolongent, vers l'extérieur et vers le haut, par un retour profilé 33 qui s'engage sous le retour en forme de crochet 53 du profilé femelle. Les retours profilés 33 et les angles intérieurs arrondis 55 entre le fond du U du profilé femelle et ses ailes 51 constituent des chemins de roulement pour des billes 4 qui y sont interposées, pour faciliter le coulissement relatif des profilés 3, 5. Des crans 57 sont formés sur les bords d'extrémité des retours en forme de crochet 53, en étant régulièrement espacés sur au moins une partie de la longueur du profilé femelle 5, les dits bords d'extrémité jouxtant les ailes 31 du profilé mâle dans le creux formé entre chacune des dites ailes et le retour profilé 33 correspondant.

La description qui précède s'applique aux diverses variantes de réalisation des glissières conformes à l'invention. La forme de la section des profilés et leur agencement relatif, en vue du coulissement d'un profilé par rapport à l'autre, pourront être modifiés pourvu que l'on reste dans le cadre de la présente invention.

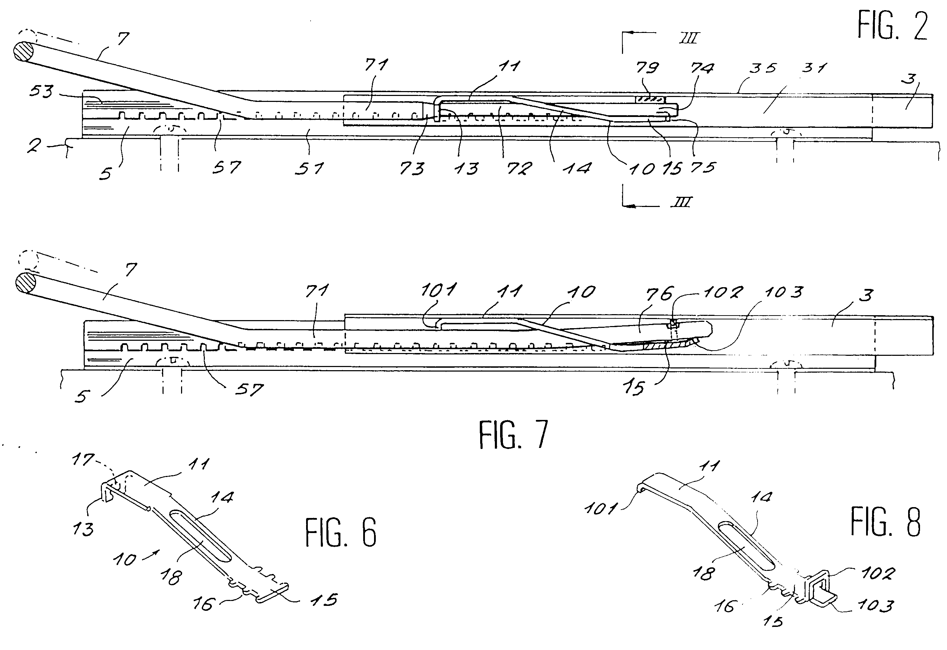

En se référant spécifiquement aux figures 2 à 6, on va maintenant décrire le système de verrouillage utilisé dans la première variante du premier mode de réalisation des glissières.

Comme on le voit sur la figure 2, à l'intérieur de la glissière est disposée une lame flexible 10, réalisée par exemple en acier à ressort. Cette lame flexible, représentée en perspective à la figure 6, comporte une partie de fixation 11 solidarisée au profilé mâle en étant par exemple fixée par des rivets (non représentés) sur le fond 35 du U constituant le dit profilé mâle. Une partie d'extrémité avant 13 de cette lame s'étend, sensiblement perpendiculairement à la direction longitudinale de la glissière, à partir de la dite partie de fixation vers le fond du profilé femelle. De l'autre côté de cette partie d'extrémité avant, la lame 10 se prolonge par une partie intermédiaire 14 qui s'étend obliquement vers le bas, c'est à dire vers le fond du profilé femelle, en s'éloignant de la dite partie avant et se termine par une partie d'extrémité arrière 15, sensiblement parallèle aux fonds des profilés et qui constitue, comme on va le voir, l'élément de verrouillage du profilé mâle sur le profilé femelle.

Cette partie arrière 15 comporte, de chaque côté, des créneaux 16 qui s'étendent latéralement (voir figures 3 et 4) au delà des ailes 31 du profilé mâle 3 en passant dans des fenêtres 37 ménagées à cet effet dans les dites ailes, et s'engagent dans les crans 57 du profilé femelle 5. Les créneaux 16 passent avec un jeu fonctionnel minimal, selon la direction longitudinale de la glissière, entre les bords latéraux des dites fenêtres 37.

Ainsi, dans la position de verrouillage de la glissière, telle que représentée sur les figures, les efforts tendant à faire coulisser le profilé mâle dans le profilé femelle sont transmis directement du profilé mâle aux créneaux 16 (par le bord de la fenêtre 37) et de ceux-ci aux crans 57 du profilé femelle et, du fait de la proximité directe des dits crans avec les ailes 31 du profilé mâle, se traduisent par des contraintes dans la lame 10 qui sont uniquement des contraintes de cisaillement des créneaux. Les autres parties de la lame 10 ne subissent donc aucune contrainte lorsque de tels efforts s'exercent et, en conséquence, les dimensions et le poids de la lame peuvent être particulièrement réduits.

Dans une autre forme de réalisation de la fenêtre 37, représentée figure 5, la dite fenêtre 37 comporte, sur son bord supérieur, des crans de même largeur que les crans 57 du profilé femelle, chacun des créneaux 16 s'engageant à la fois dans un des dits crans du bord de la fenêtre et dans un cran 57 du profilé femelle. Dans ce cas, les efforts de cisaillement entre le profilé mâle et le verrou formé par la partie d'extrémité 15 sont supportés par tous les créneaux.

La lame 10 est préformée de maniéré que les créneaux coopèrent avec les crans du profilé femelle, pour verrouiller les glissières, lorsque la lame est au repos, sans contraintes de flexion ou avec des contraintes minimales tendant à pousser sa partie d'extrémité arrière 15 vers le haut.

Pour déverrouiller les glissières et permettre le réglage longitudinal du siège, le système de glissières comporte des moyens de déverrouillage constitués, selon le premier mode de réalisation, par un palonnier 7 formé par exemple d'un tube cintré en U dont les branches 71 pénètrent respectivement dans chacune des glissières 1. Dans cette première variante, chaque branche 71 comporte une partie terminale 72 de diamètre réduit qui lui est reliée par un retreint 73. La dite partie terminal passe dans un orifice 17 réalisé dans la partie d'extrémité avant 13 de la lame 10 et dans une lumière oblongue 18 ménagée dans la partie intermédiaire 14.

L'extrémité 74 de la dite partie terminale 72 est en contact sur le dessus du verrou 15, lequel exerce une légère pression, due à une légère déformation élastique de la partie intermédiaire 14 de la lame 10, sur la dite extrémité 74, pour maintenir radialement la partie terminale 72 en contact avec les bords de l'orifice 17 et de la lumière 18. Par ailleurs, la branche 71 du palonnier 7 est bloquée axialement par butée du retreint 73 sur la partie d'extrémité avant 13 et un arrêt 75 formé par un repli de la paroi tubulaire de l'extrémité du palonnier. Une butée 79, par exemple en caoutchouc, est fixée sur le fond 35 du profilé mâle 3, entre celui-ci et le verrou 15, pour empêcher un éventuel contact direct de la partie terminale 72 du palonnier 7 avec le fond du profilé mâle et éviter ainsi tout risque de bruit.

Le déverrouillage des glissières s'effectue en tirant le palonnier vers le haut, ce qui provoque un pivotement de la partie terminale 72 vers le bas et le dégagement des créneaux 16 hors des crans 57, la partie d'extrémité avant 13 de la lame 10 servant de point d'articulation. La flexion, ainsi provoquée, de la partie intermédiaire 14 de la lame 10 crée un effort vertical de rappel du verrou en position de verrouillage dés que le palonnier est relâché.

Dans la deuxième variante, représentée à la figure 8, le verrouillage de la glissière est assuré, de manière similaire à la première variante, par engagement des créneaux 16 d'une lame flexible avec les crans 57 du profilé femelle 5. Seules la forme de la lame et le mode de liaison du palonnier sur celle-ci sont modifiés.

Dans cette deuxième variante, la partie d'extrémité avant de la lame 100 forme un rebord 101 de faible hauteur, comme on le voit sur la figure 8, sur lequel s'appuie, par en-dessous, la branche 71 du palonnier 7. Le tube 76 constituant cette branche a un diamètre sensiblement constant jusqu'à son extrémité 74. Le tube 76 passe dans la lumière 18 de la lame, puis dans un anneau 102 formé à partir de la partie d'extrémité arrière formant verrou, cet anneau s'étendant perpendiculairement à celle-ci. Le blocage axial est assuré par l'anneau 102 qui s'engage dans une rainure réalisée sur l'extrémité 74 du tube 76, le blocage de l'anneau dans la rainure étant assuré élastiquement par l'extrémité 103 de la lame.

Le déverrouillage des glissières s'effectue comme indiqué précédemment pour la première variante, en tirant le palonnier 7 vers le haut, le rebord 101 servant de pivot pour déplacer le verrou 15 vers le bas.

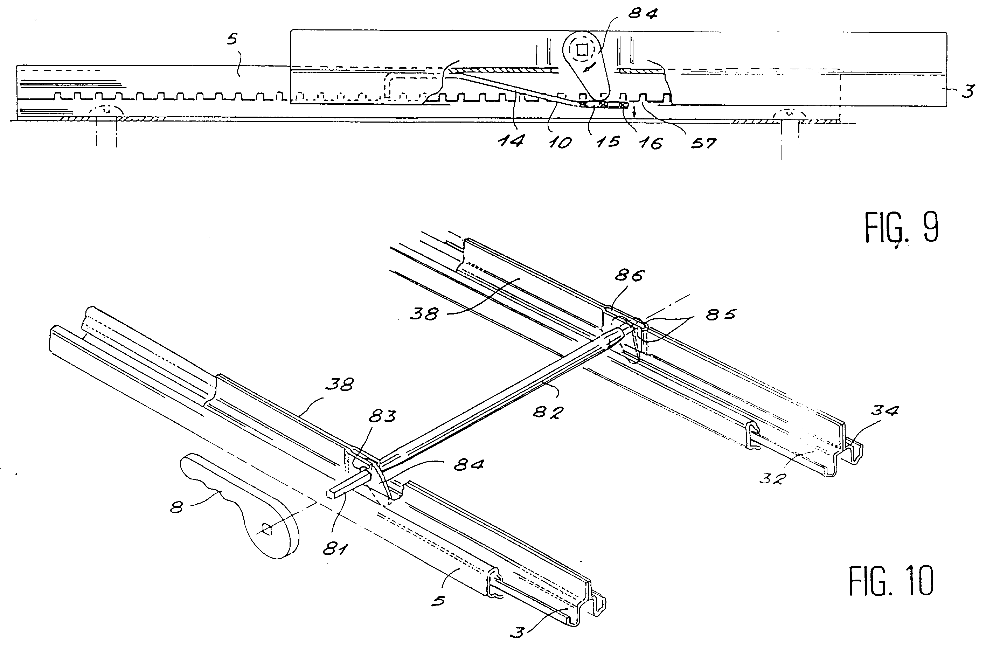

En relation avec les figures 9 et 10 on va maintenant décrire le deuxième mode de réalisation dans lequel le déverrouillage est effectué non plus par un palonnier mais par une poignée latérale pivotante 8. Cette poignée est montée sur un carré d'entraînement 81 formé sur un arbre transversal 82 qui relie les deux glissières 1. L'arbre 82 est monté pivotant dans des paliers 83 aménagés dans des ailes 38 des profilés mâles 3, qui s'étendent verticalement vers le haut à partir du fond 35 des dits profilés. Au niveau de ces paliers, pour chaque glissière, l'arbre 82 porte une came 84 qui lui est liée en rotation. Les dimensions de cette came 84 sont telles que, lorsque l'arbre 82 est entraîné en rotation au moyen de la poignée 8, la pointe de la came 84 vient appuyer sur la partie d'extrémité arrière formant verrou 15 de la lame 10, pour dégager les créneaux 16 des crans 57 du profilé femelle 5. Préférentiellement, le rappel en position de verrouillage de l'arbre 82 et des cames 84 est réalisé par un ressort de torsion, non représenté, monté entre l'arbre et le profilé mâle 3, le rappel élastique de la lame 10 servant uniquement à ramener le verrou en position d'engagement de ses créneaux avec les crans 57 du profilé femelle.

On notera que ce mode de réalisation ne nécessite pas la réalisation de lumière dans sa partie flexible intermédiaire 14. Par ailleurs, comme on le voit sur la figure 10, le profilé mâle est préférentiellement formé en deux parties 32, 34 de même profil, disposées symétriquement par rapport à un plan médian longitudinal vertical et assemblées entre-elles au niveau de la dite aile supérieure 38, ce qui permet de réaliser aisément une forme en creux 85 sur chaque partie 32, 34, dans la zone des paliers 83, de manière à loger les cames 84 dans l'évidement 86 obtenu par la combinaison de ces formes en creux.

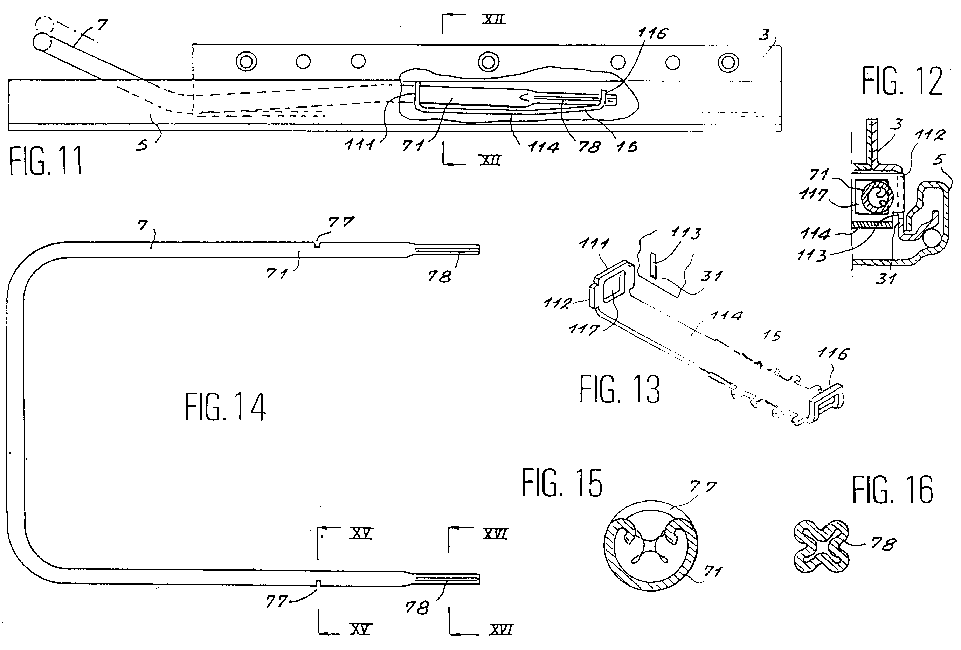

Les dessins des figures 11 à 16 illustrent une troisième variante du premier mode, dans laquelle le déverrouillage des glissières est commandé par un palonnier. Le profilé mâle 3 est réalisé en deux parties 32, 34, comme indiqué ci-dessus. La lame 10 comporte une partie d'extrémité avant 111 pourvue de chaque côté d'oreilles 112 qui, en s'engageant dans des lumières 113 correspondantes réalisées dans les flancs verticaux des deux dites parties 32, 34 constituant les ailes du profilé mâle, assurent le maintien de la lame dans le dit profilé. On notera que la mise en place de la lame est facilitée par la constitution en deux parties du profilé mâle 3. La partie intermédiaire 114 de la lame 10 s'étend à partir de la dite partie d'extrémité avant 111 vers la partie formant verrou 15, du côté du fond du profilé femelle. Un anneau 116 est formé d'une pièce avec la lame à l'extrémité de sa partie formant verrou 15 et s'étend sensiblement verticalement vers le haut à partir de celle-ci.

Les branches 71 du palonnier 7 passent dans des fenêtres 117 aménagées dans les parties d'extrémité avant 111 de chaque lame 10 des deux glissières et les extrémités 78 de ces branches, de section réduite, s'insèrent dans les anneaux 116. Le palonnier 7 comporte sur ses branches 71, symétriquement, des encoches 77 transversales qui s'engagent par écartement élastique des dites branches, lorsque le palonnier est mis en place dans les lames 10, sur les bords des dites fenêtres 117, et assurent son immobilisation en translation. La section réduite des extrémités 78 autorise le léger déplacement transversal de celles-ci dans l'anneau 116 lors du dit écartement élastique des branches.

Le déverrouillage des glissières s'effectue comme dans les variantes précédentes utilisant un palonnier, en tirant ce dernier vers le haut, ce qui provoque son pivotement par appui sur le bord supérieur de la fenêtre 117, et le déplacement vers le bas de la partie formant verrou 15.

L'invention n'est pas limitée aux différentes variantes décrites ci-dessus uniquement à titre d'exemple et peut englober toutes les combinaisons des différents types de fixation de la lame sur le profilé mâle, de liaison des moyens de déverrouillage avec la lame pourvu que lesdites combinaisons restent dans le cadre de l'invention tel que défini par les revendications. Par exemple, la fixation de la lame entre les ailes du profilé mâle, comme représentée figures 11 à 13, pourrait également être utilisée dans les variantes représentées sur les autres figures.

## Revendications

1. Glissière pour siège de véhicule, comportant un profilé femelle (5) de section en forme de U présentant deux ailes (51), et un profilé mâle (3) coulissant longitudinalement entre les dites ailes dans le dit profilé femelle, et un verrou de blocage longitudinal du profilé mâle sur le profilé femelle, le verrou étant lié à un premier des dits profilés et pourvu de créneaux (16) qui s'engagent, dans une position de verrouillage, avec des crans (57) aménagés sur l'autre profilé, et des moyens de déverrouillage agissants sur le verrou pour dégager les dits créneaux des dits crans,
caractérisée en ce que le verrou est formé par une partie d'extrémité (15) d'une lame (10) élastiquement flexible, la dite lame étant placée à l'intérieur de la glissière et fixée, à distance de la dite partie d'extrémité, sur le dit premier profilé, et en ce que les moyens de déverrouillage (7, 74, 76, 78; 8, 84) agissent sur la dite partie d'extrémité de la lame pour dégager, par une flexion élastique de ladite lame, les dits créneaux des dits crans.

2. Glissière selon la revendication 1, caractérisée en ce que la lame (10) est fixée sur le fond (35) du profilé mâle (3).

3. Glissière selon la revendication 1, caractérisée en ce que la lame (10) est fixée sur les ailes (31) du profilé mâle (3).

4. Glissière selon l'une quelconque des revendications 1 à 3, caractérisée en ce que le verrou est formé par une partie d'extrémité arrière (15) de la lame (10) et les moyens de déverrouillage comportent un palonnier (7) comprenant au moins une branche (71) articulée sur une partie d'extrémité avant (13, 101, 111) de la lame (10) et dont l'extrémité (74, 78) s'appuie sur la dite extrémité formant verrou (15).

5. Glissière selon la revendication 4, caractérisée en ce que la branche (71) du palonnier (7) est bloquée axialement sur la dite lame (10) par un retreint (73) en butée sur la partie d'extrémité avant (13) de la lame et un arrêt (75) formé à l'extrémité de la branche.

6. Glissière selon la revendication 4, caractérisée en ce que la branche (71) du palonnier est liée à la lame (10) par un anneau (102) formé sur la partie formant verrou (15) et dans lequel l'extrémité de la branche est insérée.

7. Glissière selon la revendication 4, caractérisée en ce que le palonnier (7) comporte sur chaque branche une encoche transversale (77) qui s'engage sur le bord d'une fenêtre (117) de la dite partie d'extrémité avant (111) et à travers laquelle passe la dite branche.

8. Glissière selon l'une quelconque des revendications 1 à 3, caractérisée en ce que les moyens de déverrouillage comportent une came pivotante (84) appuyant sur la partie d'extrémité formant verrou (15) et commandée par une poignée (8).

9. Glissière selon la revendication 8, caractérisée en ce que la came (84) est montée sur un arbre (82) pivotant dans des paliers (83) du profilé mâle (3) et logée dans un évidement (86) du dit profilé.

10. Glissière selon l'une quelconque des revendications précédentes, caractérisée en ce que le profilé mâle comporte des fenêtres (37) à travers lesquelles passent les créneaux (16) du verrou (15).

## Claims

1. A slide for a vehicle seat, comprising a female structural bar (5) having a U-shaped section with two wings (51), and a male structural bar (3) sliding longitudinally between the said wings in the said female structural bar, and a lock for longitudinally locking the male structural bar on the female structural bar, the lock being attached to a first of the said structural bars and provided with catches (16) which engage, in a locking position, with notches (57) provided on the other structural bar, and unlocking means acting on the lock to disengage the said catches from the said notches,
**characterised in that** the lock is formed by an end part (15) of an elastically flexible blade (10), the said blade being placed inside the slide and fixed, at a distance from the said end part, on the said first structural bar,
**and in that** the unlocking means (7, 74, 76, 78; 8, 84) act on the said end part of the blade to disengage, by an elastic deflection of the said blade, the said catches from the said notches.

2. A slide according to Claim 1,
**characterised in that** the blade (10) is fixed to the bottom (35) of the male structural bar (3).

3. A slide according to Claim 1,
**characterised in that** the blade (10) is fixed to the wings (31) of the male structural bar (3).

4. A slide according to any one of Claims 1 to 3,
**characterised in that** the lock is formed by a rear end part (15) of the blade (10) and the unlocking means comprise a control bar (7) comprising at least one leg (71) hinged on a front end part (13, 101, 111) of the blade (10) and the end (74, 78) of which rests on the said end forming lock (15).

5. A slide according to Claim 4,
**characterised in that** the leg (71) of the control bar (7) is axially locked on the said blade (10) by a neck (73) abutting against the front end part (13) of the blade and a stop device (75) formed at the end of the leg.

6. A slide according to Claim 4,
**characterised in that** the leg (71) of the control bar is attached to the blade (10) by a ring (102) formed on the part forming lock (15) and into which the end of the leg is inserted.

7. A slide according to Claim 4,
**characterised in that** the control bar (7) comprises on each leg a transversal notch (77) which engages on the edge of a slot (117) of the said front end part (111) and through which the said leg passes.

8. A slide according to any one of Claims 1 to 3,
**characterised in that** the unlocking means comprise a pivoting cam (84) resting on the end part forming lock (15) and controlled by a handle (8).

9. A slide according to Claim 8,
**characterised in that** the cam (84) is mounted on a shaft (82) pivoting in bearings (83) of the male structural bar (3) and housed in a recess (86) of the said structural bar.

10. A slide according to any one of the preceding Claims,
**characterised in that** the male structural bar comprises slots (37) through which the catches (16) of the lock (15) pass.

## Patentansprüche

1. Schiene für Fahrzeugsitze mit einem weiblichen Profil (5) mit U-förmigem Querschnitt, das zwei Flügel (51) aufweist, und einem männlichen Profil (3), das längs zwischen den genannten Flügeln im genannten weiblichen Profil gleitet, und einem Verriegelungsstift längs des männlichen Profils auf dem weiblichen Profil, wobei der Riegel mit einem der genannten Profile verbunden ist und mit Kerben (16) versehen ist, die, in Verriegelungslage, in die Einkerbungen (57) eingreifen, die an dem anderen Profil angelegt sind, und Entriegelungseinrichtungen, die auf den Riegel wirken, um die genannten Kerben aus den genannten Einkerbungen herauszuziehen,
dadurch gekennzeichnet, daß der Riegel durch ein Endstück (15) einer elastisch biegsamen Zunge (10) gebildet wird, die sich im Inneren der Schiene befindet und in einem Abstand des genannten Endstücks auf dem genannten ersten Profil befestigt ist, und wenn die Entriegelungseinrichtungen (7, 74, 76, 78; 8, 84) auf dem genannten Endstück der Zunge wirken, um durch elastische Federung der genannten Zunge die genannten Kerben aus den genannten Einkerbungen herauszuziehen.

2. Schiene nach Anspruch 1, dadurch gekennzeichnet, daß die Zunge (10) am Boden (35) des männlichen Profils (3) befestigt ist.

3. Schiene nach Anspruch 1, dadurch gekennzeichnet, daß die Zunge (10) an den Flügeln (31) des männlichen Profils (3) befestigt ist.

4. Schiene nach einem der Ansprüche 1 bis 3, dadurch gekennzeichnet, daß der Riegel durch ein vorderes Endstück (15) der Zunge (10) gebildet wird und die Entriegelungseinrichtungen ein Gestänge (7) aufweisen, das mindestens einen Zweig (71) enthält, der auf dem vorderen Endstück (13, 101, 111) der Zunge (10) drehbar ist und dessen Ende (74, 78) sich auf das genannte Ende, das den Riegel (15) bildet, abstützt.

5. Schiene nach Anspruch 4, dadurch gekennzeichnet, daß der Zweig (71) des Gestänges (7) auf der genannten Zunge (10) in axialer Richtung durch einen Einschnüranschlag (73) auf dem vorderen Endstück (13) der Zunge und durch eine Arretierung (75) blockiert ist, die an dem Ende des Zweiges gebildet ist.

6. Schiene nach Anspruch 4, dadurch gekennzeichnet, daß der Zweig (71) des Gestänges an der Zunge (10) durch einen Ring (102) verbunden ist, das auf dem Teil gebildet ist, das den Riegel (15) bildet und in welchem das Ende des Zweiges eingeführt ist.

7. Schiene nach Anspruch 4, dadurch gekennzeichnet, daß das Gestänge (7) auf jedem Zweig eine transversale Kerbe (77) aufweist, die in den Rand eines Fensters (117) des vorderen Endstücks (111) eingreift, und durch die der genannte Zweig durchgeht.

8. Schiene nach einem der Ansprüche 1 bis 3, dadurch gekennzeichnet, daß die Entriegelungseinrichtungen einen drehbaren Exzenter (84) aufweisen, der auf das Endstück drückt, das den Riegel (15) bildet und durch einen Griff (8) betätigt wird.

9. Schiene nach Anspruch 8, dadurch gekennzeichnet, daß der Exzenter (84) auf eine Welle (82) gebaut ist, die in den Lagern (83) des männlichen Profils (3) drehbar ist und in einer Aussparung (86) des genannten Profils ruht.

10. Schiene nach einem der vorhergehenden Ansprüche, dadurch gekennzeichnet, daß das männliche Profil Fenster (37) aufweist, durch die die Kerben (16) des Riegels (15) durchgehen.
